# FASCICULE DE BREVET EUROPEEN

(11) **EP 1 569 489 B1**
(45) Date de publication et mention de la délivrance du brevet: **25.12.2019**
(21) Numéro de dépôt: 04290528.1
(22) Date de dépôt: 26.02.2004
(51) Int. Cl.: H04W 8/18, H04M 1/725, H04W 8/22

(54) **Procédé de génération automatique de profils actifs pour terminal de télécommunications**
Verfahren zur automatischen Erzeugung von aktiven Profilen für ein Telekommunikationsendgerät
Method for automatic generation of telecommunication terminal active profiles

(43) Date de publication de la demande: 31.08.2005
(73) Titulaire: Orange, 75015 Paris (FR)
(72) Inventeur: Atheo, Stéphane, 44810 Heric (FR); Guillouard, Karine, 35135 Chantepie (FR); Bonnin, Jean-Marie, 35150 Corps Nuds (FR); Suciu, Lucian, 35510 Cesson Sévigné (FR); Stevant, Bruno, 35700 Rennes (FR)
(74) Mandataire: David, Alain

(56) Documents cités:
- WO-A-03/073782
- US-A- 6 088 732
- US-A- 6 105 063
- US-A1- 2003 100 308
- US-A1- 2003 119 515
- 3GPP: "Technical Specification Group Services and System Aspects; Service requirement for the 3GPP Generic User Profile (GUP); Stage 1" 3GPP TECHNICAL SPECIFICATION, janvier 2004 (2004-01), XP002289948

## Description

L'invention concerne les terminaux de télécommunications et plus particulièrement les terminaux mobiles, notamment lorsqu'ils sont dotés d'interfaces d'accès à des réseaux multiples (par exemple Ethernet, wifi, GPRS, blue tooth...).

L'invention concerne plus spécifiquement la création et la gestion de profils ou préférences d'utilisation du terminal, adaptés aux capacités de ce dernier, consistant en l'adoption de paramètres qui soient les mieux adaptés à l'environnement du terminal ainsi qu'aux différents souhaits des utilisateurs et de l'administrateur du système associé au terminal.

On a proposé un certain nombre de moyens de configuration ou de choix de profils, pour différents types de terminaux de télécommunications. Le document US 2003/0100308 A1 décrit par exemple de tels choix de profils et la configuration d'une interface de communication dite "software radio interface".

Ainsi, l'ACU de Cisco permet de configurer plusieurs profils d'accès à des réseaux à travers une carte sans fil. Il ne prend pas en charge la sélection de la carte, si plusieurs cartes sont présentes le système tente de toutes les associer, étant donné que les profils définis dans l'ACU sont spécifiques à une carte. La sélection automatique des profils est possible (c'est une option) sachant que les règles qui président à la sélection d'un profil sont les suivantes.

Il tente par défaut de s'associer au dernier réseau connu. Il écoute le réseau et si un SSID est annoncé, il choisit le profil qui y correspond. Si plusieurs profils disposent du même SSID aucune règle n'est donnée pour le choix d'un WLAN particulier. Enfin, il teste les différents profils les uns après les autres.

Pour ce qui est du stockage et des traitements associés aux profils utilisateurs et applicatif, les systèmes Windows (Windows XP) utilisent un mécanisme propriétaire : la base de registres.

La base de registres Windows est un ensemble de clés organisées en arborescence. Il existe plusieurs branches principales, les principales décrivant : les configurations de la machine locale et les configurations utilisateurs organisées en profils.

Chaque branche de l'arbre et chaque clé utilisent une liste de droits d'accès pour gérer les droits de modification et de lecture de chaque sous-branche. Ainsi il est possible d'autoriser ou d'interdire à un utilisateur ou à un groupe d'utilisateurs l'accès en écriture à une branche ou à une clé spécifique. Un mécanisme d'héritage des autorisations permet de ne pas maintenir une liste pour chaque élément de l'arbre.

Une clé peut être définie à plusieurs endroits de l'arbre. Dans ce cas, c'est l'application qui utilise la clé qui va choisir l'endroit de l'arbre qu'elle consulte. Si elle consulte plusieurs endroits dans l'arbre, c'est la branche de l'utilisateur ou la dernière branche consultée qui donne sa valeur finale à la clé.

Dans le mécanisme de la base de registres, c'est donc le mécanisme des droits d'accès (ACL) qui va déterminer la valeur active d'une clé et ce sont les applications qui doivent implémenter une interface complexe pour les gérer. De plus chaque application ayant sa propre politique d'accès à la base de registre, il est très difficile pour un administrateur de configurer un parc de machines avec des valeurs de clés qui peuvent être, soit des valeurs par défaut, soit des valeurs imposées aux utilisateurs. En effet, on ne peut pas imposer à une application un mode de consultation de la base de registre, chaque application a son propre mode de fonctionnement.

Les systèmes Unix ne disposent pas de base de registre, par contre le système de fichier permettant de décrire les préférences et les configurations est plus complet que celui des systèmes Windows. Ainsi, il est courant de prévoir des fichiers de configuration au niveau du système qui donnent des valeurs par défaut que l'utilisateur peut modifier en plaçant un fichier de configuration au sein de son répertoire. Seules les valeurs effectivement renseignées dans le fichier de configuration de l'utilisateur seront modifiées par rapport aux valeurs par défaut du système.

L'administrateur peut éventuellement configurer une application pour qu'elle n'accepte que certaines modifications de la part de l'utilisateur, mais cela dépend de l'application. Il peut par contre interdire toute modification de la part de l'utilisateur en jouant sur les droits d'accès aux fichiers.

Ce mécanisme correspond aux règles de filtrage que nous utilisons pour les paramètres proposés, les paramètres fixés fonctionnant pour leur part différemment.

Dans les spécifications TS 22.240 et TS 23.241 du 3GPP la notion de Profil Générique d'Utilisateur (PGU) est traitée. Ce PGU est une collection de données stockées et gérées par différentes entités comme l'Equipement Utilisateur (EU), le réseau mère et le réseau visité. IL affecte la manière dont les utilisateurs utilisent les différents services offerts (commutation de circuit, commutation de paquets...). Le 3GPP PGU est composé d'un certain nombre de « Composants de Profil Utilisateur » (CPU). Il est possible qu'un service individuel utilise un sous-ensemble de CPU d'un PGU.

Un PGU peut contenir plusieurs informations comme des informations générales sur l'utilisateur (nom, code postal...), les services auxquels l'utilisateur a souscrit, des données privées, les caractéristiques du terminal, etc.

Les spécifications du WAP user Agent Profile (UAProf) traitent des classes l'identification du terminal et des préférences d'information. Ces classes contiennent, en général, les caractéristiques matérielles et logicielles du terminal ainsi que des informations du réseau sur lequel il est connecté. Le profil d'Agents Utilisateurs (PAU) contient des informations utilisées pour la mise en forme de contenu.

Un PAU est différent d'un Profil de Préférence Utilisateur (PPU). Ce dernier contient des informations relatives aux applications. Par exemple, un PPU peut indiquer si l'utilisateur est intéressé par la réception de programmes de cinéma, et si c'est le cas, des informations pour chaque film. Les spécifications de l'UPP vont au-delà de l'UAProf.

Le framework CC/PP est un autre mécanisme permettant de décrire les capacités et les préférences associées aux utilisateurs et aux agents utilisateurs qui accèdent à des sites Internet. Dans ce cas aussi, les informations peuvent contenir des caractéristiques logicielles et matérielles, mais elles comportent aussi, de préférence pour les applications et les utilisateurs. Le framework CC/PP tente de fournir au terminal les informations nécessaires pour adapter au mieux le contenu et les mécanismes de livraison en prenant en compte les capacités et les préférences de l'utilisateur et des agents.

La publication SOC 2003 présente d'une manière très générale un cadre de travail qui suppose que les administrateurs, les utilisateurs et les applications puissent avoir des préférences et il propose de prendre ces préférences en compte pour la sélection d'interface. Cependant, il reste silencieux sur la manière de les représenter (le contenu précis des profils de préférence) et de les combiner pour les rendre utilisables par le système.

Windows XP, comme d'autres systèmes du marché, supporte la détection automatique des interfaces, ce qui permet au système de réagir lorsque les connexions (les cartes réseau) deviennent disponibles, ou au contraire, indisponibles. En d'autres termes, lorsque l'état du lien change, lorsque plusieurs interfaces sont actives simultanément, Windows WP met en place plusieurs routes par défaut dans la table de routage. Il faut une intervention de l'utilisateur pour obtenir un terminal mobile en état de communication. IL n'y a pas de sélection automatique de profil en fonction de l'environnement, le système se contente d'appliquer.

Dans le cas de Linux, et plus exactement avec l'implantation MIPL (Mobile IP for Linux) de mobile IP, il est possible d'associer des priorités aux différentes interfaces du terminal. Ces propriétés sont stockées dans un fichier de configuration et ne peuvent être modifiées sans l'intervention de l'utilisateur.

Le document US 6 105 063 A décrit un réseau interconnectant un serveur à plusieurs stations d'utilisateurs et la configuration de profil actif d'une station par sélection de paramètres définis dans des profils de groupes d'utilisateurs.

Les cartes PCMCIA D211 de Nokia qui supporte à la fois 802.11, GPRS et GSM-HSCSD, ne changent pas automatiquement de type de connexion. Au contraire, Nokia préfère laisser l'initiative du changement de connexion à l'utilisateur : ce dernier choisissant le type de connexion en utilisant les profils réseaux personnels.

Le but de l'invention est de proposer un système qui permette de créer de manière automatique et dynamique, un profil de préférence d'utilisation, optimal pour la configuration donnée d'un terminal mobile, sans intervention à effectuer par l'utilisateur pour que le terminal se configure dans le meilleur mode de fonctionnement correspondant à l'environnement.

On propose pour cela, conformément à l'invention, un ensemble de mise en place de profil actif de terminal de télécommunications, tel que défini par la revendication 1, ainsi qu'un procédé correspondant tel que défini dans la revendication 10.

D'autres caractéristiques, buts et avantages de l'invention, dont l'objet de la protection n'est défini que par les revendications, apparaîtront à la lecture de la description détaillée qui va suivre, faite en référence aux figures annexée sur lesquelles :
- la figure 1 est un schéma fonctionnel représentatif d'un premier mode de réalisation de l'invention ;
- la figure 2 représente schématiquement une demande de profil émise suite à une alerte ;
- la figure 3 représente schématiquement un processus d'identification de niveau de batterie ;
- la figure 4 représente schématiquement un processus de notification d'utilisateur en cours ;
- la figure 5 représente schématiquement une séquence de traitement de requête de récupération de profils (RRP).
- la figure 6 représente une organisation de paramètres sélectionnables pour un profil actif.

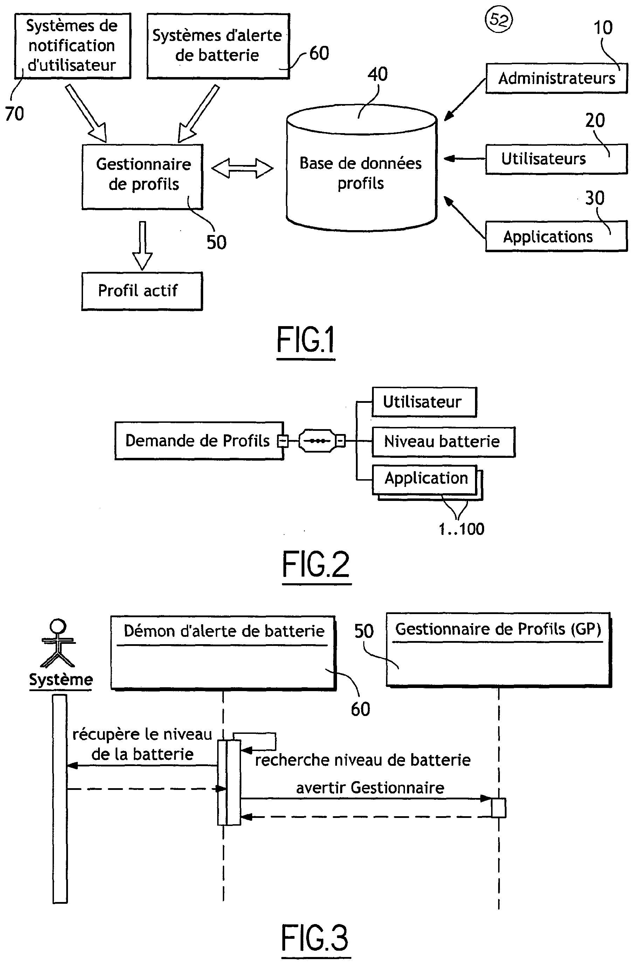

Sur la figure 1, on a représenté trois types d'acteurs relatifs au système.

Nous trouvons tout d'abord l'administrateur du système 10, puis les utilisateurs 23 de ce dernier, et enfin les applications 30.

Ils interviennent à des niveaux différents pour la création des profils. En effet, une application a des profils prédéfinis, qui sont stockés dans une base de données 40 lorsque cette dernière s'installera. Ils pourront être modifiés par des mises à jour de l'application considérée.

L'administrateur prédéfinit des préférences d'utilisation du système.

L'utilisateur 20 prédéfinit lui aussi des droits d'utilisation, mais c'est lui qui pourra changer le plus souvent ces préférences car il est l'utilisateur du système.

La base de données de profils 40 stocke tous les profils du système. Nous voyons donc qu'il convient d'identifier chacun de ces profils pour les utiliser à bon escient. Un profil est, dans le cas exposé ici, un fichier XML composé d'un entête et d'un corps.

C'est l'entête qui va permettre d'identifier le profil dans la base de données des profils.

Cette partie permet de s'assurer de l'unicité du profil. En effet, il ne peut pas exister deux profils ayant la même entête dans ce système. L'identification est composée comme suit.

Elle inclut d'abord un type de profil. Celui-ci indique la nature du profil (par exemple profil de préférence, profil de flux). Elle inclut également un contexte. Ce champ renseigne sur le contexte batterie pour lequel ce profil est défini. Il existe quatre possibilités : secteur, 100%, 50%, 25%.

Elle inclut enfin une partie auteur. Il permet de désigner l'auteur du profil, ainsi que la portée de ce profil.

Nous allons maintenant détailler la portée des profils selon les auteurs, parmi lesquelles l'administrateur 10, les utilisateurs 20, les applications 530.

Un administrateur 10 peut créer différents profils en fonction de la portée qu'il veut donner à ce dernier. Il va pouvoir raffiner ces choix pour certains utilisateurs 20 et/ou certaines applications 30.

Le profil peut viser tout utilisateur et toute application : ce profil permet à l'administrateur 40 de créer un ensemble de paramètres généraux au système. Ce profil s'appliquera à tous les utilisateurs et toutes les applications.

Le profil peut viser tout utilisateur et une application. Ce profil permet à l'administrateur 10 de créer un ensemble de paramètres dédiés à une application 30 mais valables pour tous les utilisateurs 30 du système. Dans ce cas, nous trouverons à renseigner le nom de l'application 30 concernée par ces critères.

Ce profil peut viser un utilisateur et toutes les applications : ce profil permet à l'administrateur 10 de créer un ensemble de paramètres dédiés à un utilisateur 20 mais valables pour toutes les applications qu'il va utiliser. Dans ce cas, nous trouverons à renseigner, l'identifiant de l'utilisateur 20 concerné par ces critères. L'identifiant sera son nom de connexion au système.

Ce profil peut viser un utilisateur et une application : ce profil permet à l'administrateur 10 de créer un ensemble de paramètres dédiés à une application 20 valables pour un utilisateur 20 du système. Dans ce cas, nous trouverons à renseigner le nom de l'application 30 ainsi que l'identifiant de l'utilisateur 20 concerné par ces critères. L'identifiant sera son nom de connexion au système.

Chaque utilisateur 20 du système est capable de créer ses propres Profils de Ressources et Préférences (PRP). Il peut donc avoir des souhaits différents de l'administrateur 10. L'utilisateur 20 est référencé par son nom de connexion au système.

Le profil d'utilisateur peut viser toutes les applications. Ce profil permet à l'utilisateur de créer un ensemble de paramètres dédiés à l'ensemble des applications du système.

Le profil d'utilisateur peut viser une application. Ce profil permet à l'utilisateur de créer un ensemble de paramètres dédiés à une application. Dans ce cas, nous trouverons à renseigner le nom de l'application concernée par ces critères.

Dans le cas d'une application 30 dite intelligente, cette dernière peut disposer d'un profil formé d'un ensemble de critères définissant son mode de fonctionnement. Dans ce cas, les paramètres sont stockés dans un fichier XML dit PRP applicatif. L'illustration peut être le niveau de sécurité demandé pour une application de consultation de comptes bancaires sur Internet. Ce niveau est élevé. L'application 30 est référencé par son nom.

Il existe également ici un profil par défaut. Les trois acteurs du système capables de créer des PRP spécifiques, peuvent ne pas remplir tous les champs de fichier XML. IL existe un fichier par défaut, défini par le système lui-même, qui contient toutes les valeurs par défaut des paramètres du PRP. De cette manière, l'administrateur, l'utilisateur, ou l'application pourront ne pas remplir tous les critères. Ce profil est renseigné par l'entête « système pour tout utilisateur et toute application ».

On appelle préférences l'ensemble des paramètres stockés dans le corps du fichier XML composant le profil. Chaque paramètre a un attribut obligatoire, qui indique son état : « proposé ou fixé ». Cet attribut est indispensable pour la création d'un profil actif.

Outre un gestionnaire de profils dont on détaillera ci-après la fonction, le dispositif de la figure 1 comporte également un système d'alerte de batterie 60. Ce système d'alerte de batterie 60 permet d'indiquer au gestionnaire de profils 50 l'état de la batterie. Ce système notifie le gestionnaire 50 à chaque fois qu'un seuil est atteint. Il existe quatre seuils :
- secteur : le terminal est relié au secteur ;
- 100% : le terminal n'est pas sur secteur et la batterie est pleine ;
- 50% : la batterie est à moitié vide ;
- 25% : la batterie est faible.

En outre, un système de notification d'utilisateur 70 permet d'indiquer au gestionnaire de profils quel utilisateur 20 est actuellement connecté au terminal.

Le gestionnaire de profils 50 est le composant qui va générer, pour chaque application 20, le profil contenant les paramètres optimums par rapport aux différents souhaits des acteurs du système, mais aussi par rapport à l'état de la batterie, ainsi qu'aux applications 30 en cours d'exécution. Le profil généré est alors le profil actif.

Nous venons de voir que les acteurs du système peuvent créer un certain nombre de profils qui sont stockés dans une base de données de profils 40.

Il convient de pouvoir extraire la valeur d'un paramètre qui sera retenu, parmi cet ensemble de valeurs. Nous allons maintenant décrire le mécanisme de sélection de profil actif, qui se déroule ici sur la base d'une sélection préliminaire des profils à filtrer, suivie d'un établissement de la hiérarchie des paramètres, puis de la mise en œuvre de règles de filtrage afin de procéder à la création de chaque paramètre actif, en vue de générer le profil actif.

Le système (et le processus) a pour cela, besoin de connaître les meilleurs critères pour la création du profil actif.

Le gestionnaire 50 va demander les profils correspondant aux critères suivants : l'utilisateur connecté, l'état de la batterie, ainsi que les applications en cours d'exécution. Puis, pour chaque application, il va créer le profil actif.

Les systèmes d'alerte permettent au gestionnaire de profil actif 50 d'être informé de l'état de la batterie (système d'alerte 60) de la personne connectée actuellement au terminal (système d'alarme 70), ainsi que des applications en cours d'exécution (système d'alerte 80). Le gestionnaire de profils 50 est informé par des messages XML, tel que celui représenté à la figure 2.

Ces messages ou notifications par démons, sont indépendants du mécanisme de sélection de profil actif. Ils peuvent intervenir à tout moment.

Conformément à la représentation de la figure 3, le démon, constitué par le système d'alerte de batterie 60, va lire régulièrement le fichier système de niveau de batterie (/proc sous linux), et va envoyer un message d'alerte au gestionnaire de profils 50 dès qu'un seuil est atteint.

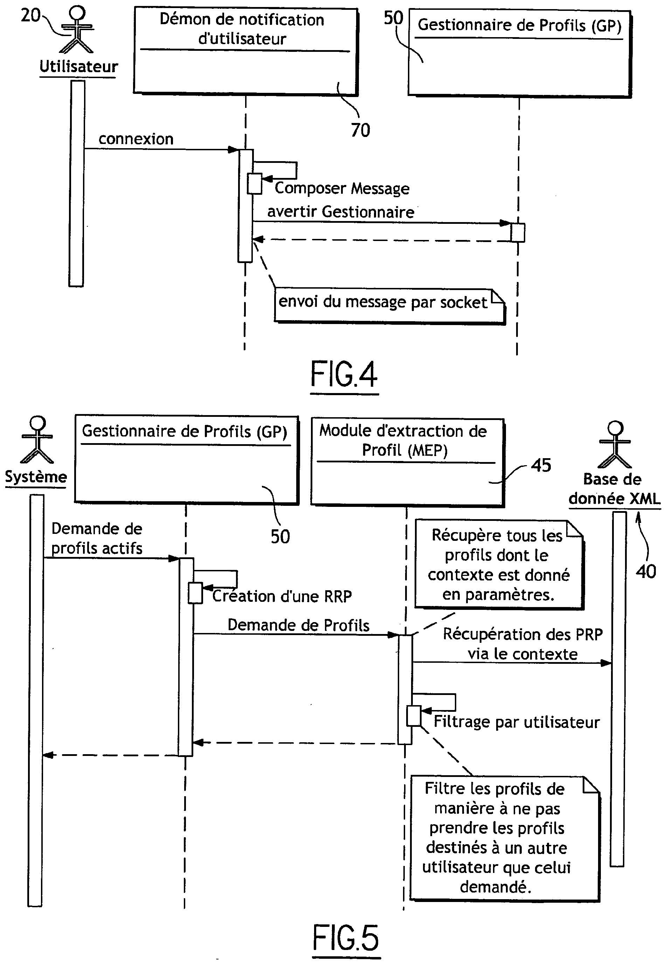

Conformément à la figure 4, le démon est constitué par le système de notification de l'utilisateur en cours 70, va lire régulièrement le fichier des utilisateurs connectés puis envoie un message d'alerte au gestionnaire de profils dès que l'utilisateur change. Voici la séquence de notification d'un nouvel utilisateur.

Lorsqu'une application est lancée, elle notifie le gestionnaire de profil 50 de son lancement afin que celui-ci mette à jour sa liste « d'applications en cours d'exécution ». Lorsqu'une application 30 se termine, elle notifie également le gestionnaire de profils 50.

La base de données XML 40 stocke les différents profils définis par les divers acteurs du système. Elle ne fait pas de classement entre les différents contextes. Il convient donc de récupérer les profils voulus en fonction de l'utilisateur connecté, du niveau de batterie, et des applications en cours d'exécution.

La base de données 40 est pour cela composée ici d'une partie de stockage 40 et d'un Module d'Extraction des Profils 45 (MEP).

Le MEP 44 reçoit une Requête de Récupération des Profils (RRP) émise par le GP 50. Dès réception de cette requête, le MEP 44 l'analyse (figure 5). Dans un premier temps, il récupère l'ensemble des profils dont le contexte est donné dans la RRP. Puis il filtre et récupère seulement les profils appartenant aux catégories suivantes : profils par défaut, profils administrateurs pour tous les utilisateurs et toutes les applications, profils administrateur pour l'utilisateur donné dans la RRP et toutes les applications, profils utilisateurs donné dans la RRP et toutes les applications, profils de chaque application en cours d'exécution.

Comme nous l'avons exprimé ci-avant, le gestionnaire de profils 50 est notifié des changements de l'environnement par les systèmes d'alerte utilisateur 70, de batterie 60, et d'applications lancées 80. Il connaît donc l'utilisateur 20 connecté, ainsi que le niveau de batterie disponible dans le terminal.

De cette manière, le gestionnaire de profils 50 va récupérer l'ensemble des profils ayant pour contexte le niveau de batterie indiqué, dont parmi ces derniers, les profils pour tous les utilisateurs 20, ceux de l'utilisateur en cours de connexion, ainsi que ceux des applications 30.

Le gestionnaire de profil 50 ne va donc pas récupérer les profils dédiés à l'utilisateur « Athéo » si c'est l'utilisateur « trum » qui est connecté.

La requête de récupération des profils (RRP) est analysée par le module d'extraction des profils 45 de la base de données 40. Une fois cette requête analysée, la base de données 40 fournit les profils demandés au GP 50.

Un profil actif est un profil (PRP), dont les paramètres sont applicables à un utilisateur pour une application donnée. Ces paramètres sont le résultat d'un filtrage, que l'on va décrire ci-après, effectué entre tous les paramètres des profils relatifs à l'utilisateur 20 considéré et l'application 30 considérée.

Un profil actif a ici une identification identique aux autres profils, mais avec une partie auteur « créée par le système », pour « un utilisateur et une application ». le nom de l'application ainsi que l'identifiant de l'utilisateur concerné par ces critères sont remplis par le système au moment de la création.

Le système va donc créer autant de profils actifs que d'applications 30 en cours d'exécution.

La hiérarchie des paramètres qui va être utilisée peut être représentée par le tableau suivant :

| | | | | | |
|---|---|---|---|---|---|
| Paramètre β du profil par défaut pour tous les utilisateurs et toutes les applications | Paramètre β Du profil administrateur pour tous les utilisateurs et toutes les applications | | | Paramètre β choisi | ↓ |
| | Paramètre β du profil administrateur pour tous les utilisateurs et une application | | | Paramètre β choisi | Sens de parcours 1 |
| | Paramètre β du profil administrateur pour un utilisateur et toutes les applications | Paramètre β du profil utilisateur pour toutes les applications | | Paramètre β choisi | ↓ |
| | Paramètre β du profil administrateur pour un utilisateur et une application | Paramètre β du profil utilisateur pour une application | Paramètre β du profil application pour elle-même | Paramètre β choisi | |
| Paramètre β choisi | Paramètre β choisi | Paramètre β choisi | Paramètre β choisi | Paramètre β retenu | |
| → | Sens de parcours 2 | | | → | |

Nous pouvons énoncer la règle suivante : la valeur d'un paramètre est celle du premier fixé ou du dernier proposé.

Soit un paramètre nommé β. On récupère les diverse valeurs de ce paramètre et on les stocke comme le montre le tableau. Puis on commence le parcours du tableau, en l'effectuant colonne après colonne, ce qui correspond, grâce au classement adopté, à un filtrage du paramètre selon un niveau de contrainte allant du plus général au plus spécifique. Pour la première colonne, on récupère la valeur par défaut. Pour la seconde colonne, on détermine la valeur du paramètre voulu par l'administrateur. On effectue un filtrage dans le sens « du plus général au plus spécifique ». La troisième colonne va permettre de déterminer quelle est la valeur retenue par l'utilisateur. La quatrième colonne va récupérer la valeur de l'application.

Nous nous retrouvons avec un ensemble de paramètres β présélectionnés sur une ligne. Il ne reste plus à appliquer la règle de filtrage sur cette ligne de paramètres, et nous obtenons un paramètre β actif. On réitère l'opération pour chaque paramètre. Ces valeurs sont alors stockées dans la section paramètres du profil actif.

Comme il existe un profil actif par application, il faudra créer autant de profils actifs que d'applications en cours d'exécution sur le terminal.

Il est à noter que seul le profil par défaut est obligatoire, les autres profils pouvant être omis.

Les règles de filtrage, illustrées par les flèches horizontale et verticale sur ce tableau, sont exprimables de la façon suivante :
- tous les paramètres ont une priorité (« proposée » ou « fixée)
- on parcourt tous les paramètres
- la valeur retenue est la valeur du premier paramètre de priorité « fixée » par un profil ;
- cependant, il n'existe pas de paramètres dont la priorité est « fixée », la valeur retenue sera celle du dernier paramètre « proposé ».

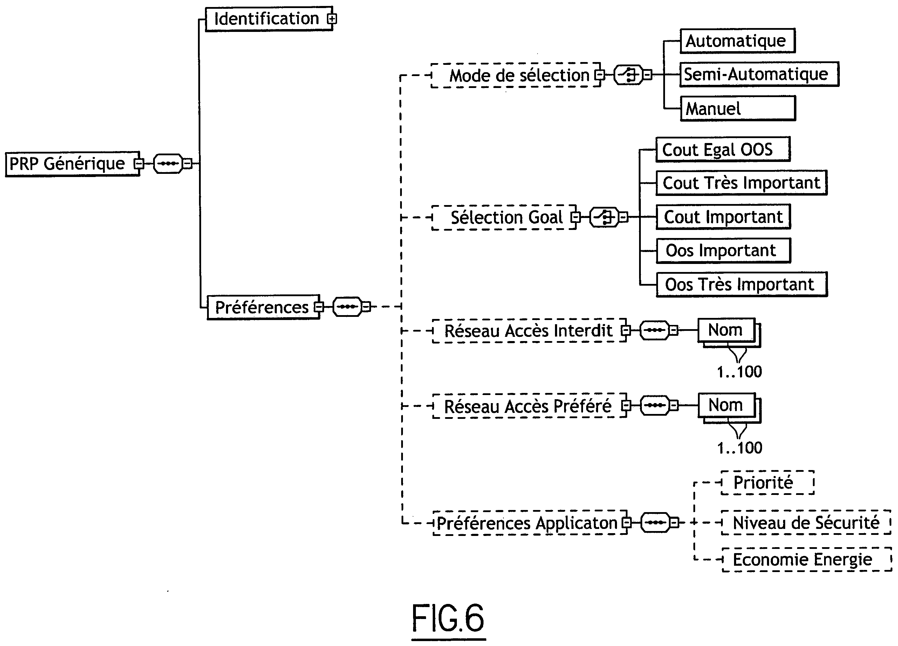

Les critères sur lesquels les différents acteurs du système peuvent influer pour constituer des paramètres actifs sont, dans cet exemple, les suivants (représentation graphique des préférences sur la figure 6).

Le paramètre « mode de sélection » indique le degré d'intervention attendu de l'utilisateur 20 par le système lors du changement de mode opératoire du terminal. Il permet de déterminer si les flux d'une application ont été redirigés de manière automatique ou non. Il existe trois valeurs possibles : sélection manuelle, sélection semi-automatique, sélection automatique.

Par défaut, le mode de sélection est automatique.

Le paramètre «coût» indique le facteur dominant entre le coût monétaire et la qualité de service souhaité. Il existe cinq choix possibles : le coût est bien plus important que la qualité de service, le coût est plus important que la qualité de service, le coût est aussi important que la qualité de service, le coût est moins important que la qualité de service, le coût est bien moins important que la qualité de service.

Par défaut, le coût est aussi important que la QoS.

Le paramètre constitué par la liste des réseaux d'accès interdits contient l'ensemble des réseaux d'accès interdits. Par défaut, aucun réseau d'accès n'est interdit.

Le paramètre constitué par la liste des réseaux d'accès préférés contient une liste classée par ordre décroissant sur les réseaux d'accès préférés. Par défaut, il n'en existe pas.

Le critère constitué des préférences d'application permet de renseigner trois paramètres, qui sont les suivants :
Le paramètre de niveau de priorité d'une application donnée renseigné par un administrateur et/ou un utilisateur, indique le niveau de priorité entre 1 et 10 souhaité pour une application donnée. Par défaut, ce paramètre vaut 5.

Le paramètre de niveau de sécurité d'une application donnée renseigné par un administrateur, un utilisateur, et/ou l'application concernée si elle en a la capacité, indique le niveau de sécurité requis pour l'application donnée. Par défaut, ce paramètre vaut 5.

Le paramètre de support du mode veille indique, pour une application donnée, sa capacité à fonctionner lorsque l'interface d'accès au réseau est en mode veille. Ce paramètre sera utilisé pour empêcher une interface réseau de passer en mode veille lorsque les applications qui communiquent dessus ne fonctionnent pas correctement en mode veille active. Par défaut, ce paramètre vaut vrai.

On décrira maintenant un exemple détaillé de mise en œuvre pratique, dans lequel on définit un système avec un administrateur, un utilisateur, ainsi que deux applications, dont une est dite intelligente, c'est à dire capable de produire une liste de préférences (PRP).

On va donc ainsi procéder à la création d'un profil actif utilisable, reflétant un consensus entre les choix des différents protagonistes du système, afin d'être utilisé ici par un algorithme de décision aiguillant les flux de chaque application sur une des interfaces réseau.

Comme exprimé précédemment, un système d'alerte permet d'indiquer, au gestionnaire de profils 50, l'état de la batterie. Nous allons décrire le scénario suivant.

Un utilisateur dont le nom de connexion est « sathéo » se connecte sur le terminal. Il utilise deux applications : une de vidéoconférence (VIC), l'autre de courrier électronique (Outlook). Le système est dans un état de batterie 100%.

La sélection de profil actif donnera lieu au final à un profil à 100%.

Nous allons dans un premier temps décrire les profils créés par les différents acteurs du système. Puis nous allons décrire la création des profils actifs pour l'utilisateur « sathéo »et le niveau de batterie 100%, et enfin le profil actif pour l'utilisateur « sathéo » et le niveau de batterie 50%.

### Les profils de l'administrateur pour batterie à 100% :

L'administrateur 10 décide de créer un profil qui va couvrir l'ensemble de cas afin que l'ensemble des utilisateurs 20 et applications 30 ait les mêmes paramètres. Cependant, il spécialise l'utilisation de l'application Outlook, qui nécessite des conditions particulières de sécurité.

### Profil d'administrateur, pour batterie à 100%, pour tout utilisateur et toute application :

L'administrateur propose certains paramètres qui seront communs à toute utilisation :
- mode de sélection : manuel
- coût : coût égal à QOS
- priorité : 5
- niveau de sécurité : 5
- gestion de l'économie d'énergie : faux

### Profil d'administrateur, pour batterie à 100%, pour tout utilisateur et pour l'application Outlook :

L'utilisation d'Outlook nécessite plus de sécurité, au vu de la charte de l'entreprise. L'administrateur 10 va donc augmenter le niveau de sécurité de cette application et fixer cette valeur.

Niveau de sécurité : 9.

### Profil d'administrateur, pour batterie à 50%, pour tout utilisateur et pour toute application :

L'administrateur décide de proposer un indice de coût important. Il déconseille par ailleurs l'utilisation du réseau 802.11A très gourmand en énergie :
- coût : coût important (fixé)
- réseau interdit : 802.11A (fixé)

### Profil d'administrateur, pour batterie à 50%, pour tout utilisateur et pour l'application Outlook :

L'application Outlook est toujours aussi critique, il faut donc un niveau de sécurité élevé.
- niveau de sécurité : 9 (fixé)

### Les profils de l'utilisateur :

### Profil de l'utilisateur, pour batterie à 100% et pour toute application

L'utilisateur définit ses propres valeurs. Il est très maniaque et veut un niveau de sécurité élevé, ainsi que valider le mode de sélection choisi :
- mode de sélection : manuel
- coût : QOS importante
- réseau interdit : Bluetooth
- RA préférés : 802.11G, 802.11A, 802.11b, GPRS
- Niveau de sécurité : 9

### Profil de l'utilisateur, pour batterie à 100% pour l'application VIC (vidéo conférence) :

Pour l'application VIC, l'utilisateur 10 souhaite des paramètres différents afin de rendre l'application la plus disponible possible :
- mode de sélection : automatique
- réseau interdit : GSM
- niveau de sécurité : 9
- Economie d'énergie : vrai

### Profil de l'utilisateur pour batterie à 50% et pour toute application :

Les préférences restent les mêmes :
- mode de sélection : manuel
- coût : QOS importante
- réseau interdit : Bluetooth
- RA préférés : 802.11G, 802.11A, 802.11b, GPRS
- niveau de sécurité : 9

### Profil de l'utilisateur pour batterie à 50% et pour l'application VIC :

Les paramètres restent les mêmes :
- mode de sélection : automatique
- réseau interdit : GSM
- niveau de sécurité : 9
- économie d'énergie : vrai

### Les profils des applications :

### Profil des applications pour batterie à 100%

### Les profils de l'application Outlook

L'application Outlook est dite intelligente et peut définir ses propres préférences de fonctionnement.
- mode de sélection : semi-automatique
- priorité : 7
- sécurité : 7
- économie d'énergie : vrai

### Profil de l'application Outlook, pour batterie à 50% :

Voici les paramètres de l'application Outlook lorsque le niveau de batterie est à 50% :
- RA interdits : 802.11a, GSM
- priorité : 7
- niveau de sécurité : 7
- économie d'énergie : vrai

### Le profil par défaut

Ce profil représente les paramètres par défaut du système.

Pour une batterie à 100%, comme pour une batterie à 50%, on se reportera au contenu des tableaux ci-après, dans la case en haut à gauche à chaque fois.

Pour générer le profil actif pour l'utilisateur « sathéo », pour l'application VIC avec batterie de 100%, il faut récupérer le profil par défaut, le profil administrateur pour tout utilisateur et toute application, le profil administrateur pour tout utilisateur et l'application VIC, le profil utilisateur « sathéo » pour toutes les applications, le profil utilisateur « sathéo » pour l'application VIC.

Le tableau de filtrage pour le mode de sélection du paramètre « mode de sélection » est le suivant :

| | | | | |
|---|---|---|---|---|
| Paramètre β du PRP par défaut pour tous les utilisateurs et toutes les applications | Paramètre β Du PRP administrateur pour tous les utilisateurs et toutes les applications | | | ↓ |
| automatique | manuel | | | |
| | Paramètre β du PRP administrateur pour tous les utilisateurs et une application | | | Sens de parcours 1 |
| | N.A. | | | |
| | Paramètre β du PRP administrateur pour un utilisateur et toutes les applications | Paramètre β du PRP utilisateur pour toutes les applications | | ↓ |
| | N.A. | Manuel | | |
| | Paramètre β du PRP administrateur pour un utilisateur et une application | Paramètre β du PRP utilisateur pour une application | Paramètre β du PRP application pour elle-même | ↓ |
| | N.A. | Automatique | N.A. | |
| Automatique | Manuel | Automatique | N.A. | Automatique |
| → | Sens de parcours 2 | | → | |

Le paramètre actif pour le mode de sélection est donc automatique.

Le tableau de filtrage pour le coût est quant à lui le suivant :

| | | | | |
|---|---|---|---|---|
| Paramètre β du PRP par défaut pour tous les utilisateurs et toutes les applications | Paramètre β du PRP administrateur pour tous les utilisateurs et toutes les applications | | | ↓ |
| Coût = QOS | Coût = QOS | | | |
| | Paramètre β du PRP administrateur pour tous les utilisateurs et une application | | | |
| | N.A. | | | |
| | Paramètre β du PRP administrateur pour un utilisateur et toutes les applications | Paramètre β du PRP utilisateur pour toutes les applications | | Sens de parcours 1 |
| | N.A. | QOS important | | ↓ |
| | Paramètre β du PRP administrateur pour un utilisateur et une application | Paramètre β du PRP utilisateur pour une application | Paramètre β du PRP application pour elle-même | |
| | N.A. | N.A. | N.A. | |
| Coût = QOS | Coût = QOS | QOS important | N.A. | QOS important |
| → | Sens de parcours 2 | | → | |

Le paramètre actif de coût est donc « important ».

Voici le tableau de filtrage pour le paramètre « RA interdits ».

| | | | | |
|---|---|---|---|---|
| Paramètre β du PRP par défaut pour tous les utilisateurs et toutes les applications | Paramètre β du PRP administrateur pour tous les utilisateurs et toutes les applications | | | |
| Aucun | N.A. | | | ↓ |
| | Paramètre β du PRP administrateur pour tous les utilisateurs et une application | | | |
| | N.A. | | | Sens de parcours 1 |
| | Paramètre β du PRP administrateur pour un utilisateur et toutes les applications | Paramètre β du PRP utilisateur pour toutes les applications | | |
| | N.A. | Bluetooth | | ↓ |
| | Paramètre β du PRP administrateur pour un utilisateur et une application | Paramètre β du PRP utilisateur pour une application | Paramètre β du PRP application Pour elle-même | |
| | N.A. | GSM | N.A. | |
| Automatique | Manuel | GSM | N.A. | G.S.M |
| → | Sens de parcours 2 | | → | |

Le paramètre actif de réseau interdit est donc GSM.

Voici le tableau de filtrage pour le paramètre « RA préférés »

| | | | | |
|---|---|---|---|---|
| Paramètre β du PRP par défaut pour tous les utilisateurs et toutes les applications | Paramètre β du PRP administrateur pour tous les utilisateurs et toutes les applications | | | ↓ |
| Aucun | N.A. | | | |
| | Paramètre β du PRP administrateur pour tous les utilisateurs et une application | | | Sens de parcours 1 |
| | N.A. | | | |
| | Paramètre β du PRP administrateur pour un utilisateur et toutes les applications | Paramètre β du PRP utilisateur pour toutes les applications | | |
| | N.A. | 802.11G | | |
| | | 802.11A | | |
| | | 802.11b, GPRS | | |
| | Paramètre β du PRP administrateur pour un utilisateur et une application | Paramètre β du PRP utilisateur pour une application | Paramètre β du PRP application Pour elle-même | ↓ |
| | N.A. | N.A. | N.A. | |
| Aucun | N.A. | 802.11g | N.A. | 802.11G |
| | | 802.11A | | 802.11A |
| | | 802.11b, GPRS | | 802.11b, GPRS |
| → | Sens de parcours 2 | | → | |

La liste des réseaux préférés, en tant que paramètre actif, est donc : 802.11G, 802.11A, 802.11b, GPRS.

Voici le tableau de filtrage pour le paramètre de priorité :

| | | | | |
|---|---|---|---|---|
| Paramètre β du PRP par défaut pour tous les utilisateurs et toutes les applications | Paramètre β du PRP administrateur pour tous les utilisateurs et toutes les applications | | | ↓ |
| 5 | 5 | | | |
| | Paramètre β du PRP administrateur pour tous les utilisateurs et une application | | | Sens de parcours 1 |
| | N.A. | | | |
| | Paramètre β du PRP administrateur pour un utilisateur et toutes les applications | Paramètre β du PRP utilisateur pour toutes les applications | | |
| | N.A. | N.A | | |
| | Paramètre β du PRP administrateur pour un utilisateur et une application | Paramètre β du PRP utilisateur pour une application | Paramètre β du PRP application pour elle-même | ↓ |
| | N.A. | N.A. | N.A. | |
| 5 | 5 | N.A. | N.A. | 5 |
| → | Sens de parcours 2 | | → | |

Le paramètre actif de priorité est donc 5.

Voici le tableau de filtrage pour le niveau de sécurité :

| | | | | |
|---|---|---|---|---|
| Paramètre β du PRP par défaut pour tous les utilisateurs et toutes les applications | Paramètre β du PRP administrateur pour tous les utilisateurs et toutes les applications | | | ↓ |
| 5 | 5 | | | |
| | Paramètre β du PRP administrateur pour tous les utilisateurs et une application | | | Sens de parcours 1 |
| | N.A. | | | |
| | Paramètre β du PRP administrateur pour un utilisateur et toutes les applications | Paramètre β du PRP utilisateur pour toutes les applications | | |
| | N.A. | 9 | | |
| | Paramètre β du PRP administrateur pour un utilisateur et une application | Paramètre β du PRP utilisateur pour une application | Paramètre β du PRP application Pour elle-même | ↓ |
| | N.A. | 9 | N.A. | |
| 5 | 5 | 9 | N.A. | 9 |
| → | Sens de parcours 2 | | → | |

Le paramètre actif de niveau de sécurité est donc 9.

Voici le tableau de filtrage pour l'économie d'énergie :

| | | | | |
|---|---|---|---|---|
| Paramètre β du PRP par défaut pour tous les utilisateurs et toutes les applications | Paramètre β du PRP administrateur pour tous les utilisateurs et toutes les applications | | | ↓ |
| faux | faux | | | |
| | Paramètre β du PRP administrateur pour tous les utilisateurs et une application | | | Sens de parcours 1 |
| | N.A. | | | |
| | Paramètre β du PRP administrateur pour un utilisateur et toutes les applications | Paramètre β du PRP utilisateur pour toutes les applications | | |
| | N.A. | N.A. | | |
| | Paramètre β du PRP administrateur pour un utilisateur et une application | Paramètre β du PRP utilisateur pour une application | Paramètre β du PRP application Pour elle-même | ↓ |
| | N.A. | vrai | N.A. | |
| Faux | Faux | Vrai | N.A. | Vrai |
| → | Sens de parcours 2 | | → | |

Le paramètre actif d'économie d'énergie est donc « vrai ».

Grâce à ces règles de filtrage, le profil actif créé est donc:
- mode de sélection : automatique
- coût : QOS important
- RA interdits : GSM
- RA préférés : 802.11g, 802.11A, 802.11b, GPRS.
- priorité : 5
- niveau de sécurité : 9
- économie d'énergie : vrai

## Revendications

1. Ensemble de mise en place de profil actif de terminal de télécommunications consistant en une série de paramètres de fonctionnement du terminal, l'ensemble comprenant des moyens de mémorisation (40) d'une pluralité de profils parmi lesquels des profils souhaités par un ou des utilisateurs (20), des profils souhaités par un administrateur (10) du terminal, et des profils souhaités par une ou des applications (30) susceptible(s) d'être mise(s) en œuvre sur le terminal, **caractérisé en ce que** l'ensemble comprend des moyens (50) pour extraire, parmi ces différents profils, une partie d'entre-eux en fonction de l'utilisateur connecté au terminal et de la ou des application(s) mise(s) en œuvre, ainsi que des moyens (50) pour sélectionner, parmi les valeurs des paramètres des différents profils ainsi extraits, une série de valeurs de paramètres et constituer un profil actif du terminal à partir de ces valeurs de paramètres, ledit ensemble étant **caractérisé en ce que** les moyens (50) de sélection de valeurs de paramètres sont adaptés pour mettre en place une hiérarchie des profils extraits et pour sélectionner la valeur de chaque paramètre du profil actif en parcourant cette hiérarchie de profils selon un sens allant d'un niveau de contrainte sur le paramètre plus général à un niveau de contrainte plus spécifique, tous lesdits paramètres ayant une priorité proposée ou fixée, la valeur d'un paramètre de priorité fixée étant une valeur de paramètre imposée, la valeur du paramètre sélectionnée en tant que valeur du paramètre du profil actif étant la première valeur du paramètre imposée par un profil qui soit rencontré au cours de ce parcours de hiérarchie ou la dernière valeur du paramètre proposée au cours de ce parcours si la valeur du paramètre n'est imposée par aucun profil rencontré au cours de ce parcours de hiérarchie.

2. Ensemble selon la revendication 1, **caractérisé en ce que**, pour une application mise en œuvre sur le terminal, ladite hiérarchie est représentée par un tableau dont les colonnes correspondent respectivement à :
- un profil par défaut ;
- un profil souhaité par l'administrateur du terminal ;
- un profil souhaité par l'utilisateur connecté au terminal ; et
- un profil souhaité par ladite application mise en œuvre sur le terminal ;
et dans lequel chaque colonne comprend :
- une valeur du paramètre pour tous les utilisateurs et toutes les applications ;
- une valeur du paramètre pour tous les utilisateurs et ladite application mise en œuvre sur le terminal ;
- une valeur du paramètre pour l'utilisateur connecté au terminal et toutes les applications ; et
- une valeur du paramètre pour l'utilisateur connecté au terminal et ladite application mise en œuvre sur le terminal.

3. Ensemble selon la revendication 1 ou 2, **caractérisé en ce que** l'ensemble de mise en place de profil (30) est configuré pour effectuer une telle mise en place pour chacune des applications exécutées sur le terminal.

4. Ensemble selon l'une quelconque des revendications 1 à 3, **caractérisé en ce que** les moyens (50) d'extraction de profils et de sélection des paramètres sont prévus pour prendre en compte également un état de niveau de batterie (60) du terminal.

5. Ensemble selon la revendication 1, **caractérisé en ce que** les profils hiérarchisés ayant des portées différentes en termes d'utilisateur(s) (20) et d'application(s) (30) visés par le profil considéré, la hiérarchisation de profils est telle que les profils sont classés du plus général au plus spécifique en termes de telle portée.

6. Ensemble selon la revendication 1 ou la revendication 5, **caractérisé en ce que** la hiérarchisation positionne les profils souhaités par les utilisateurs (20) avant les profils souhaités par les applications (30).

7. Ensemble selon l'une quelconque des revendications 1 à 6, **caractérisé en ce que** la hiérarchisation positionne les profils souhaités par l'administrateur (10) avant les profils souhaités par le ou les utilisateur(s) (20) et avant les profils souhaités pour la ou les application(s)(30).

8. Ensemble selon l'une quelconque des revendications précédentes, **caractérisé en ce que** les paramètres constituant un profil comprennent un ou des paramètres parmi la liste constituée du mode manuel de changement de mode opératoire du terminal/de mode automatique de changement de mode opératoire du terminal/du niveau de priorité entre coût monétaire et qualité de service souhaitée/de spécification(s) de réseau(x) d'accès interdit(s)/d'identification de réseau(x) d'accès préféré(s)/de niveau de priorité d'une application donnée/de niveau de sécurité d'une application donnée/de support ou non du mode veille par une application (30) donnée.

9. Ensemble selon l'une quelconque des revendications précédentes, **caractérisé en ce que** le terminal de télécommunications est un terminal mobile.

10. Procédé de mise en place de profil actif de terminal de télécommunications consistant en une série de paramètres de fonctionnement du terminal, le procédé comprenant une étape consistant à fournir une série de profils mémorisés parmi lesquels des profils souhaités par un ou des utilisateurs (20), des profils souhaités par un administrateur (10) du terminal ainsi que des profils souhaités par une ou des application(s) (30) susceptible(s) d'être mise(s) en œuvre sur le terminal, le procédé comprenant l'étape consistant à extraire parmi ces différents profils une partie d'entre-eux en fonction de l'utilisateur connecté sur le terminal et de la ou des application(s) mise(s) en œuvre, ainsi qu'une étape consistant à sélectionner, parmi les valeurs des paramètres des différents profils ainsi extraits, une série de valeurs de paramètres et constituer avec ceux-ci le profil actif du terminal, ledit procédé étant **caractérisé en ce que** l'étape de sélection des valeurs de paramètres est prévue pour mettre en place une hiérarchie des profils extraits et pour sélectionner la valeur de chaque paramètre du profil actif en parcourant cette hiérarchie de profils selon un sens allant d'un niveau de contrainte sur le paramètre plus général à un niveau de contrainte plus spécifique, tous lesdits paramètres ayant une priorité proposée ou fixée, la valeur d'un paramètre de priorité fixée étant une valeur de paramètre imposée, la valeur du paramètre sélectionnée en tant que valeur du paramètre du profil actif étant la première valeur du paramètre imposé par un profil qui soit rencontré au cours de ce parcours de hiérarchie ou la dernière valeur du paramètre proposée au cours de ce parcours si la valeur du paramètre n'est imposée par aucun profil rencontré au cours de ce parcours de hiérarchie.

## Patentansprüche

1. Anordnung zur Einrichtung eines aktiven Profils eines Telekommunikationsendgeräts, bestehend aus einer Reihe von Betriebsparametern des Endgeräts, die Anordnung umfassend Mittel zum Speichern (40) einer Mehrzahl von Profilen, darunter Profile, die von einem Benutzer oder Benutzern (20) gewünscht sind, Profile, die von einem Administrator (10) des Endgeräts gewünscht sind, und Profile, die von einer Anwendung oder Anwendungen (30) gewünscht sind, die auf dem Endgerät ausgeführt werden kann oder können, **dadurch gekennzeichnet, dass** die Anordnung Mittel (50) umfasst, um aus diesen verschiedenen Profilen einen Teil von ihnen in Abhängigkeit von dem Benutzer, der mit dem Endgerät verbunden ist, und der oder den ausgeführten Anwendung(en) zu extrahieren, sowie Mittel (50), um aus den Werten der Parameter der verschiedenen so extrahierten Profile eine Reihe von Werten von Parametern auszuwählen und ein aktives Profil des Endgeräts anhand dieser Werte von Parametern zu bilden, wobei die Anordnung **dadurch gekennzeichnet ist, dass** die Mittel (50) zum Auswählen von Werten von Parametern dazu ausgelegt sind, eine Hierarchie der extrahierten Profile einzurichten und den Wert jedes Parameters des aktiven Profils auszuwählen, indem diese Hierarchie von Profilen in einer Richtung von einem allgemeineren Niveau einer Einschränkung des Parameters zu einem spezifischeren Niveau einer Einschränkung durchlaufen wird, wobei alle der Parameter eine vorgeschlagene oder festgelegte Priorität aufweisen, wobei der Wert eines Parameters einer festgelegten Priorität ein vorgeschriebener Parameterwert ist, wobei der Wert des Parameters, der als Wert des Parameters des aktiven Profils ausgewählt ist, der erste Wert des Parameters ist, der von einem Profil vorgeschrieben wird, das während dieses Hierarchiedurchlaufs angetroffen wird, oder der letzte Wert des Parameters, der während dieses Durchlaufs vorgeschlagen wird, wenn der Wert des Parameters von keinem Profil vorgeschrieben wird, das während dieses Hierarchiedurchlaufs angetroffen wird.

2. Anordnung nach Anspruch 1, **dadurch gekennzeichnet, dass** für eine Anwendung, die auf dem Endgerät ausgeführt wird, die Hierarchie von einer Tabelle dargestellt wird, deren Spalten jeweils Folgendem entsprechen:
- einem Standardprofil;
- einem Profil, das von dem Administrator des Endgeräts gewünscht ist;
- einem Profil, das von dem Benutzer gewünscht ist, der mit dem Endgerät verbunden ist; und
- einem Profil, das von der Anwendung gewünscht ist, die auf dem Endgerät ausgeführt wird; und in der jede Spalte Folgendes umfasst:
- einen Wert des Parameters für alle Benutzer und alle Anwendungen;
- einen Wert des Parameters für alle Benutzer und die Anwendung, die auf dem Endgerät ausgeführt wird;
- einen Wert des Parameters für den Benutzer, der mit dem Endgerät verbunden ist, und alle Anwendungen; und
- einen Wert des Parameters für den Benutzer, der mit dem Endgerät verbunden ist, und die Anwendung, die auf dem Endgerät ausgeführt wird.

3. Anordnung nach Anspruch 1 oder 2, **dadurch gekennzeichnet, dass** die Anordnung zur Einrichtung eines Profils (30) dafür ausgelegt ist, diese Einrichtung für jede der Anwendungen durchzuführen, die auf dem Endgerät ausgeführt werden.

4. Anordnung nach einem der Ansprüche 1 bis 3, **dadurch gekennzeichnet, dass** die Mittel (50) zur Extrahierung von Profilen und zur Auswahl der Parameter dazu vorgesehen sind, ebenfalls einen Ladezustand einer Batterie (60) des Endgeräts zu berücksichtigen.

5. Anordnung nach Anspruch 1, **dadurch gekennzeichnet, dass**, wobei die hierarchisierten Profile unterschiedliche Rahmen in Bezug auf Benutzer (20) und Anwendung(en) (30) aufweisen, auf die das betrachtete Profil abzielt, die Hierarchisierung von Profilen derart ist, dass die Profile im Hinblick auf diesen Rahmen vom allgemeinsten zum spezifischsten sortiert sind.

6. Anordnung nach Anspruch 1 oder 5, **dadurch gekennzeichnet, dass** die Hierarchisierung die Profile, die von den Benutzern (20) gewünscht sind, vor den Profilen positioniert, die von den Anwendungen (30) gewünscht sind.

7. Anordnung nach einem der Ansprüche 1 bis 6, **dadurch gekennzeichnet, dass** die Hierarchisierung die Profile, die von dem Administrator (10) gewünscht sind, vor den Profilen positioniert, die von dem oder den Benutzer(n) (20) gewünscht sind, und vor den Profilen, die von der oder den Anwendung(en) (30) gewünscht sind.

8. Anordnung nach einem der vorhergehenden Ansprüche, **dadurch gekennzeichnet, dass** die Parameter, die ein Profil bilden, einen Parameter oder mehrere Parameter aus der Liste umfassen, die von Folgendem gebildet ist: dem manuellen Modus zum Wechseln der Betriebsart des Endgeräts / dem automatischen Modus zum Wechseln der Betriebsart des Endgeräts / dem Prioritätsniveau der finanziellen Kosten und gewünschten Qualität des Dienstes / von (einer) Vorgabe(n) eines untersagten Zugangsnetzwerks oder untersagter Zugangsnetzwerke / der Identifikation eines bevorzugten Netzwerks oder bevorzugter Netzwerke / einem Prioritätsniveau einer bestimmten Anwendung / einem Sicherheitssniveau einer bestimmten Anwendung / ob der Standby-Modus von einer bestimmten Anwendung (30) unterstützt wird oder nicht.

9. Anordnung nach einem der vorhergehenden Ansprüche, **dadurch gekennzeichnet, dass** das Telekommunikationsendgerät ein mobiles Endgerät ist.

10. Verfahren zur Einrichtung eines aktiven Profils eines Telekommunikationsendgeräts, bestehend aus einer Reihe von Betriebsparametern des Endgeräts, das Verfahren umfassend einen Schritt, der darin besteht, eine Reihe gespeicherter Profile bereitzustellen, darunter Profile, die von einem Benutzer oder Benutzern (20) gewünscht sind, Profile, die von einem Administrator (10) des Endgeräts gewünscht sind, sowie Profile, die von einer Anwendung oder Anwendungen (30) gewünscht sind, die auf dem Endgerät ausgeführt werden kann oder können, das Verfahren umfassend den Schritt, der darin besteht, aus diesen verschiedenen Profilen einen Teil von ihnen in Abhängigkeit von dem Benutzer, der mit dem Endgerät verbunden ist, und der oder den ausgeführten Anwendung(en) zu extrahieren, sowie einen Schritt, der darin besteht, aus den Werten der Parameter der verschiedenen so extrahierten Profile eine Reihe von Werten von Parametern auszuwählen und mit diesen das aktive Profil des Endgeräts zu bilden, wobei das Verfahren **dadurch gekennzeichnet ist, dass** der Schritt des Auswählens von Werten von Parametern dafür vorgesehen ist, eine Hierarchie der extrahierten Profile einzurichten und den Wert jedes Parameters des aktiven Profils auszuwählen, indem diese Hierarchie von Profilen in einer Richtung von einem allgemeineren Niveau einer Einschränkung des Parameters zu einem spezifischeren Niveau einer Einschränkung durchlaufen wird, wobei alle der Parameter eine vorgeschlagene oder festgelegte Priorität aufweisen, wobei der Wert eines Parameters einer festgelegten Priorität ein vorgeschriebener Parameterwert ist, wobei der Wert des Parameters, der als Wert des Parameters des aktiven Profils ausgewählt ist, der erste Wert des Parameters ist, der von einem Profil vorgeschrieben wird, das während dieses Hierarchiedurchlaufs angetroffen wird, oder der letzte Wert des Parameters, der während dieses Durchlaufs vorgeschlagen wird, wenn der Wert des Parameters von keinem Profil vorgeschrieben wird, das während dieses Hierarchiedurchlaufs angetroffen wird.

## Claims

1. Assembly for setup of a telecommunications terminal active profile consisting of a series of operating parameters of the terminal, the assembly comprising storage means (40) for a plurality of profiles among which are profiles desired by one or more users (20), profiles desired by an administrator (10) of the terminal, and profiles desired by one or more applications (30) able to be implemented on the terminal, **characterized in that** the assembly comprises means (50) for extracting, from among these various profiles, some of them as a function of the user connected to the terminal and of the application or applications implemented, as well as means (50) for selecting, from among the values of the parameters of the various profiles thus extracted, a series of values of parameters and constructing an active profile of the terminal on the basis of these values of parameters, said assembly being **characterized in that** the means (50) for selecting values of parameters are adapted to set up a hierarchy of the profiles extracted and to select the value of each parameter of the active profile by traversing this hierarchy of profiles in a direction going from a level of constraint on the parameter which is more general to a more specific level of constraint, all said parameters having a priority which is proposed or fixed, the value of a parameter of fixed priority being an imposed parameter value, the parameter value selected as value of the parameter of the active profile being the parameter's first value imposed by a profile which is encountered in the course of this traversal of hierarchy or the parameter's last value proposed in the course of this traversal if the value of the parameter is not imposed by any profile encountered in the course of this traversal of hierarchy.

2. Assembly according to Claim 1, **characterized in that**, for an application implemented on the terminal, said hierarchy is represented by an array whose columns correspond respectively to:
- a default profile;
- a profile desired by the administrator of the terminal;
- a profile desired by the user connected to the terminal; and
- a profile desired by said application implemented on the terminal;
and in which each column comprises:
- a value of the parameter for all the users and all the applications;
- a value of the parameter for all the users and said application implemented on the terminal;
- a value of the parameter for the user connected to the terminal and all the applications; and
- a value of the parameter for the user connected to the terminal and said application implemented on the terminal.

3. Assembly according to Claim 1 or 2, **characterized in that** the assembly for profile setup (30) is configured to perform such a setup for each of the applications executed on the terminal.

4. Assembly according to any one of Claims 1 to 3, **characterized in that** the means (50) for extracting profiles and for selecting the parameters are devised to take into account also a state of battery level (60) of the terminal.

5. Assembly according to Claim 1, **characterized in that**, the hierarchized profiles having different scopes in terms of user(s) (20) and of application (s) (30) envisaged by the profile considered, the hierarchization of profiles is such that the profiles are ranked from the most general to the most specific in terms of such scope.

6. Assembly according to Claim 1 or Claim 5, **characterized in that** the hierarchization positions the profiles desired by the users (20) before the profiles desired by the applications (30).

7. Assembly according to any one of Claims 1 to 6, **characterized in that** the hierarchization positions the profiles desired by the administrator (10) before the profiles desired by the user(s) (20) and before the profiles desired for the application(s) (30).

8. Assembly according to any one of the preceding claims, **characterized in that** the parameters constituting a profile comprise one or more parameters from among the list consisting of the manual mode of change of operative mode of the terminal/of automatic mode of change of operative mode of the terminal/of the priority level between monetary cost and quality of service desired/of specification(s) of prohibited access network(s)/of identification of preferred access network(s)/of priority level of a given application/of security level of a given application/of support or non-support of the monitoring mode by a given application (30).

9. Assembly according to any one of the preceding claims, **characterized in that** the telecommunications terminal is a mobile terminal.

10. Method for setup of a telecommunications terminal active profile consisting of a series of operating parameters of the terminal, the method comprising a step consisting in providing a series of stored profiles among which are profiles desired by one or more users (20), profiles desired by an administrator (10) of the terminal as well as profiles desired by one or more application (s) (30) able to be implemented on the terminal, the method comprising the step consisting in extracting from among these various profiles some of them as a function of the user connected to the terminal and of the application or applications implemented, as well as a step consisting in selecting, from among the values of the parameters of the various profiles thus extracted, a series of values of parameters and constructing with the latter the active profile of the terminal, said method being **characterized in that** the step of selecting the values of parameters is designed to set up a hierarchy of the profiles extracted and to select the value of each parameter of the active profile by traversing this hierarchy of profiles in a direction going from a level of constraint on the parameter which is more general to a more specific level of constraint, all said parameters having a priority which is proposed or fixed, the value of a parameter of fixed priority being an imposed parameter value, the parameter value selected as value of the parameter of the active profile being the first value of the parameter imposed by a profile which is encountered in the course of this traversal of hierarchy or the parameter's last value proposed in the course of this traversal if the value of the parameter is not imposed by any profile encountered in the course of this traversal of hierarchy.
